# EUROPÄISCHE PATENTANMELDUNG

(11) **EP 3 318 788 A1**
(43) Veröffentlichungstag der Anmeldung: **09.05.2018**
(21) Anmeldenummer: 16197487.8
(22) Anmeldetag: 07.11.2016
(51) Int. Cl.: F16L 37/086, B23Q 11/10, F16L 37/22

(54) **WASSERANSCHLUSSVORRICHTUNG**

(71) Anmelder: HILTI Aktiengesellschaft, 9494 Schaan (LI)
(72) Erfinder: Rupprecht, Hans, 81477 Muenchen (DE)
(74) Vertreter: Hilti Aktiengesellschaft Corporate Intellectual Property

(57) **Zusammenfassung**

Wasseranschlussvorrichtung mit einer Auslöseeinrichtung; einen Sperrstift; eine Aufnahmehülse zur Aufnahme des Schlauchverbinders und mit wenigstens einer Aussparung für den Sperrstift; und einen Blockierring mit einer ersten und zweiten Seitenfläche, wobei der Sperrstift in einer ersten und zweiten Position in der Aussparung positionierbar ist, sodass in der ersten Position ein Schlauchverbinder blockiert und in der zweiten Position der Schlauchverbinder zur Entnahme freigegeben ist, und wobei der Blockierring in einer ersten und zweiten Position positionierbar ist, sodass in der ersten Position die erste Seitenfläche den Sperrstift in der ersten Position hält und in der zweiten Position der Sperrstift in die zweite Position bewegbar ist, und wobei die Auslöseeinrichtung von einer ersten in eine zweite Position bewegbar ist, sodass in der zweiten Position der Absatz der Auslöseeinrichtung gegen den Blockierring drückt, um den Blockierring in die zweite Position zu bewegen und damit den Sperrstift von der ersten in die zweite Position bewegbar macht.

## Beschreibung

Die vorliegende Erfindung betrifft eine Wasseranschlussvorrichtung, insbesondere für ein Wasseraufbereitungsgerät, zur wiederlösbaren Verbindung mit einem Schlauchverbinder.

Wasseraufbereitungsgeräte stellen ein Wasserrecyclingsystem dar, bei dem Wasser in einem geschlossenen Kreislauf mit einer Kernbohrmaschine oder einer Kreissäge zirkuliert. Gemäß einer alternativen Arbeitsweise des Wasseraufbereitungsgerätes ist es jedoch auch möglich, dass Wasser nicht in einem Kreislauf mit den Werkzeugmaschinen zirkuliert, sondern lediglich von dem Wasseraufbereitungsgerät zu den Werkzeugmaschinen befördert wird. Bei der Verwendung von Kernbohrmaschinen oder Kreissägen zum Zerschneiden eines mineralischen Werkstoffs, beispielsweise Beton oder Stein, ist es notwendig das Werkzeug, d.h. die Bohrkrone oder das Sägeblatt, zu kühlen und zu spülen. Das Spülen des Werkzeugs dient dazu, Staub und Schlamm, der bei der Bearbeitung des Werkstoffs entsteht, von dem Werkzeug abzuwaschen. Für gewöhnlich wird das Werkzeug einer Kernbohrmaschine oder einer Kreissäge mit Wasser gekühlt und gespült. Das Wasser wird hierfür in einem Wasseraufbereitungsgerät zur Verfügung gestellt. In einem Aufnahmebehälter des Wasseraufbereitungsgeräts ist Wasser gespeichert. Der Aufnahmebehälter kann auch als Wasserspeicher bezeichnet werden. Mit Hilfe einer Wasserpumpe, die sich in einem sogenannten Saugkopf des Wasseraufbereitungsgeräts befindet und für gewöhnlich oberhalb des Wasserspeichers positioniert ist, wird das Wasser über eine Wasserleitung (Wasserschlauch) zu den Werkzeugen befördert. Das Wasser verläuft in einem Kreislauf, sodass das Wasser in einer zweiten Wasserleitung (Wasserschlauch) wieder zu dem Wasseraufbereitungsgerät zurückbefördert wird, nachdem die Werkzeuge (Bohrkrone oder Sägeblatt) gekühlt und gespült wurden. Durch das Kühlen und Spülen des Werkzeugs verschmutzt jedoch das Wasser mit Staub und Schlamm, der sich während der Bearbeitung des Werkstoffs bildet. Um die Komponenten und insbesondere die Pumpe des Wasseraufbereitungsgeräts nicht durch den Staub oder Schlamm zu beschädigen, muss das verschmutzte Wasser gefiltert werden. Hierzu befindet sich in dem Wasseraufbereitungsgerät eine Filtereinrichtung. Für gewöhnlich ist die Filtereinrichtung in Form eines Filterbeutels ausgestaltet, durch den das Wasser gefiltert wird, bevor es wieder in den Wasserspeicher gelangt und wieder von der Pumpe des Saugkopfes zu den Werkzeugen gefördert werden kann. Um die Wasserleitung mit dem Wasseraufbereitungsgerät wiederlösbar zu verbinden, ist an einem freien Ende der Wasserleitung ein Schlauchverbinder und an dem Wasseraufbereitungsgerät ein Wasseranschluss vorgesehen.

Sowohl das Verbinden der Wasserleitung mit dem Wasseraufbereitungsgerät als auch das erneute Lösen der Wasserleitung von dem Wasseraufbereitungsgerät, kann bei den auf dem Markt befindlichen Wasseranschlussvorrichtungen bzw. bei den Wasseranschlussvorrichtungen gemäß dem Stand der Technik aufwendig und zeitraubend gestaltet sein.

Aufgabe der vorliegenden Erfindung ist es daher, eine Wasseranschlussvorrichtung, insbesondere für ein Wasseraufbereitungsgerät, zur wiederlösbaren Verbindung mit einem Schlauchverbinder bereitzustellen, mit der auf einfache Art und Weise sowohl das Verbinden der Wasserleitung mit dem Wasseraufbereitungsgerät als auch das erneute Lösen der Wasserleitung von dem Wasseraufbereitungsgerät gewährleistet ist.

Die Aufgabe wird gelöst durch den Gegenstand des unabhängigen Anspruchs 1. Vorteilhafte Ausführungsformen des erfindungsgemäßen Gegenstands sind in den abhängigen Ansprüchen enthalten.

Die Aufgabe wird dabei gelöst durch das Bereitstellen einer Wasseranschlussvorrichtung, insbesondere für ein Wasseraufbereitungsgerät, zur wiederlösbaren Verbindung mit einem Schlauchverbinder.

Erfindungsgemäß ist für die Wasseranschlussvorrichtung vorgesehen
- eine Auslöseeinrichtung in Form einer Hülse mit einer Druckfläche und einem Absatz;
- wenigstens einen Sperrstift zum Halten des Schlauchverbinders in der Wasseranschlussvorrichtung;
- eine Aufnahmehülse zur Aufnahme des Schlauchverbinders und mit wenigstens einer (schlitzförmigen) Aussparung zur Aufnahme des wenigstens einen Sperrstiftes; und
- einen Blockierring mit einer ersten und zweiten Seitenfläche;
wobei der wenigstens eine Sperrstift in einer ersten und zweiten Position in der Aussparung reversibel positionierbar ist, sodass in der ersten Position ein in der Aufnahmehülse befindlicher Schlauchverbinder blockiert ist und in der zweiten Position der in der Aufnahmehülse befindliche Schlauchverbinder zur Entnahme aus der Aufnahmehülse freigegeben ist, und wobei der Blockierring in einer ersten und zweiten Position reversibel positionierbar ist, sodass in der ersten Position die erste Seitenfläche des Blockierrings den wenigstens einen Sperrstift in der ersten Position hält und in der zweiten Position der Sperrstift in die zweite Position bewegbar ist, und wobei die Auslöseeinrichtung durch Druck auf die Druckfläche von einer ersten Position in eine zweite Position reversibel bewegbar ist, sodass in der zweiten Position der Absatz der Auslöseeinrichtung gegen die erste Seitenfläche des Blockierrings drückt, um den Blockierring in die zweite Position zu bewegen und damit den wenigstens einen Sperrstift von der ersten Position in die zweite Position bewegbar macht.

Gemäß einer vorteilhaften Ausführungsform der vorliegenden Erfindung kann vorgesehen sein, dass der Blockierring eine Feder enthält, um den Blockierring federbeaufschlagt in der ersten Position zu halten. Hierdurch ist sichergestellt, dass der Blockierring gegen die Federkraft der Feder in der ersten Position gehalten ist, Darüber hinaus ist es möglich, dass der Blockierring mit einem gewissen Kraftaufwand gegen die Federkraft der Feder von der ersten Position in die zweite Position bewegt werden kann.

Entsprechend einer weiteren vorteilhaften Ausführungsform kann vorgesehen sein, dass wenigstens ein zweiter Sperrstift enthalten ist. Durch einen zweiten Sperrstift ist ein noch besseres Halten des Schlauchverbinders in der Wasseranschlussvorrichtung möglich.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: eine Ausschnitt eines Wasseraufbereitungsgeräts mit einer erfindungsgemäßen Wasseranschlussvorrichtung zur wiederlösbaren Verbindung mit einem Schlauchverbinder;
- Fig. 2: eine Schnittzeichnung der erfindungsgemäßen Wasseranschlussvorrichtung;
- Fig. 3: eine Explosionszeichnung der erfindungsgemäßen Wasseranschlussvorrichtung;
- Fig. 4: eine Seitenansicht auf einen Schlauchverbinder zum Anschließen an der erfindungsgemäßen Wasseranschlussvorrichtung;
- Fig. 5: eine perspektivische Rückansicht einer Aufnahmehülse und Auslöseeinrichtung der erfindungsgemäßen Wasseranschlussvorrichtung;
- Fig. 6: eine perspektivische Rückansicht der Auslöseeinrichtung der erfindungsgemäßen Wasseranschlussvorrichtung;
- Fig. 7: eine Seitenansicht der Aufnahmehülse und eines Blockierrings mit Feder der erfindungsgemäßen Wasseranschlussvorrichtung;
- Fig. 8: eine Seitenansicht der Aufnahmehülse mit Sperrstiften der erfindungsgemäßen Wasseranschlussvorrichtung;
- Fig. 9: eine Seitenansicht der Aufnahmehülse, des Blockierrings samt Feder und eines Adapters;
- Fig. 10: eine Seitenansicht der Aufnahmehülse und des Adapters;
- Fig. 11: eine Seitenansicht der Aufnahmehülse, des Adapters, des Blockierrings samt Feder und der Auslöseeinrichtung als Schnittzeichnung;
- Fig. 12: eine seitliche Schnittansicht der Aufnahmehülse, des Adapters, des Blockierrings samt Feder und der Auslöseeinrichtung;
- Fig. 13: eine erste perspektivische Schnittansicht der Aufnahmehülse, des Adapters, des Blockierrings samt Feder und der Auslöseeinrichtung; und
- Fig. 14: eine zweite perspektivische Schnittansicht der Aufnahmehülse, des Adapters, des Blockierrings samt Feder und der Auslöseeinrichtung.

### Ausführungsbeispiele:

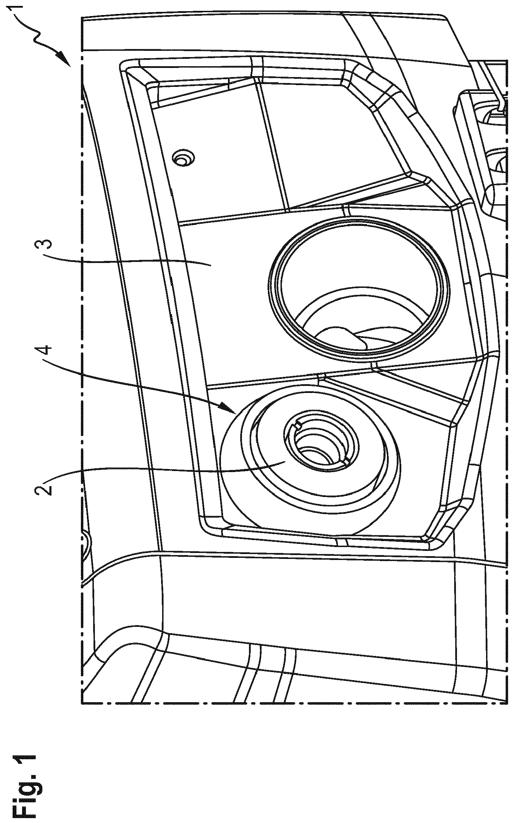

Fig. 1 zeigt einen Ausschnitt einer Frontpartie 2 eines Wasseraufbereitungsgeräts 1. Das Wasseraufbereitungsgerät 1 enthält im Wesentlichen einen Wasserspeicher sowie einen Saugkopf 3. Das Wasseraufbereitungsgerät 1 dient im Wesentlichen dazu, um Wasser zu speichern und einer Werkzeugmaschine zur Verfügung zu stellen. Bei der Werkzeugmaschine kann es sich um eine Kernbohrmaschine oder eine Kreissäge handeln. Die Werkzeugmaschine ist in den Figuren nicht dargestellt.

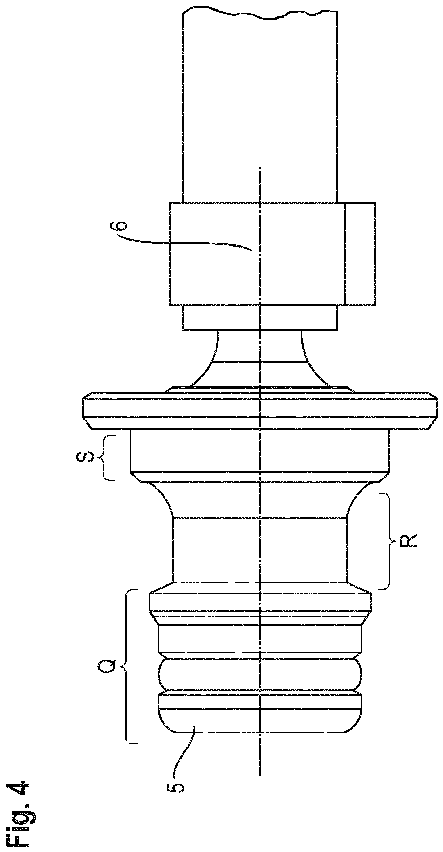

Das Wasseraufbereitungsgerät 1 enthält des Weiteren eine Wasseranschlussvorrichtung 4 zur wiederlösbaren Verbindung mit einem Schlauchverbinder 5. Wie in Fig. 4 gezeigt, handelt es sich bei dem Schlauchverbinder 5 um ein Verbindungsstück an einem Ende eines Wasserschlauchs 6. Der Schlauchverbinder 5 enthält einen ersten Bereich Q mit einem ersten Durchmesser, einen zweiten Bereich R mit einem zweiten Durchmesser und einen dritten Bereich S mit einem dritten Durchmesser, wobei der zweite Durchmesser kleiner ist als der erste Durchmesser und dritte Durchmesser. Der zweite Durchmesser kann auch als Taille bezeichnet werden. Der erste Durchmesser ist kleiner als der dritte Durchmesser.

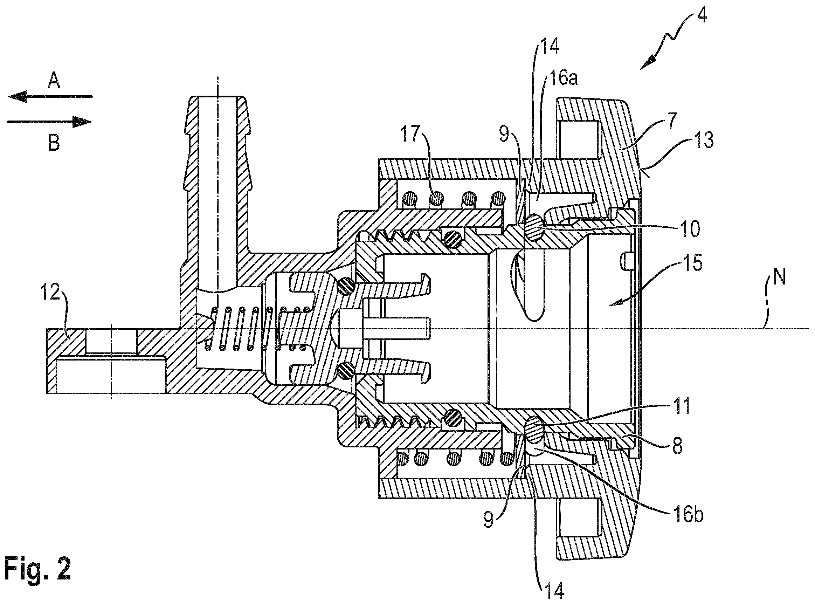

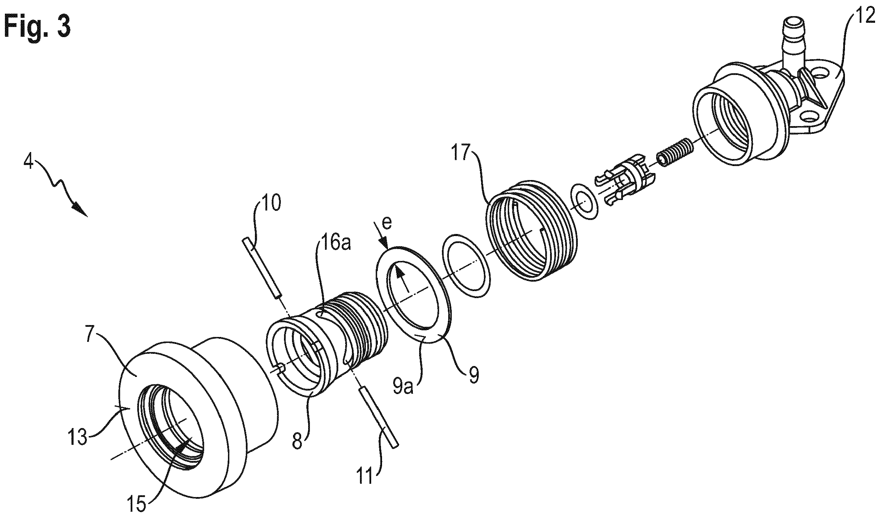

Wie in den Fig. 2 und 3 gezeigt, enthält die Wasseranschlussvorrichtung 4 im Wesentlichen eine Auslöseeinrichtung 7, eine Aufnahmehülse 8, einen Blockierring 9, einen ersten zylindrischen Sperrstift 10 und zweiten zylindrischen Sperrstift 11.

Wie nachfolgend im Detail beschrieben dient der erste und zweite Sperrstift 10, 11 zum Halten des Schlauchverbinders 5 in der Wasseranschlussvorrichtung 4.

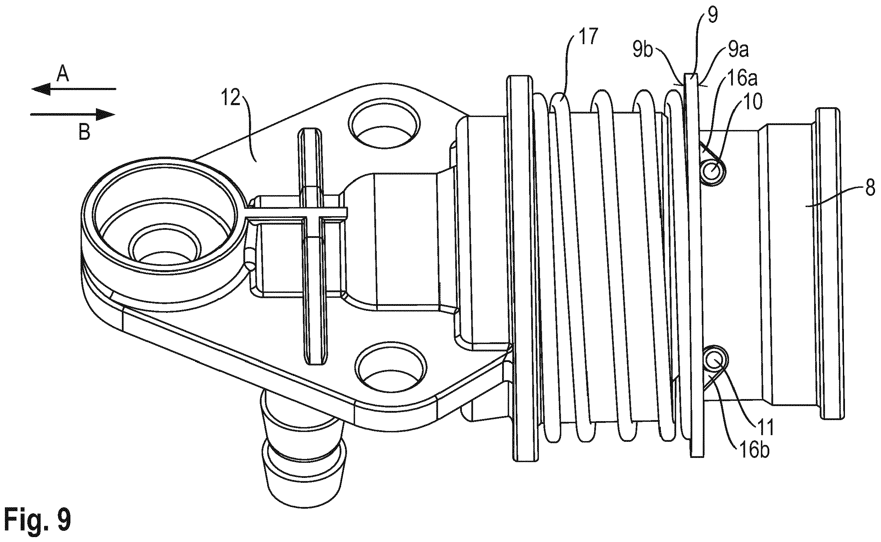

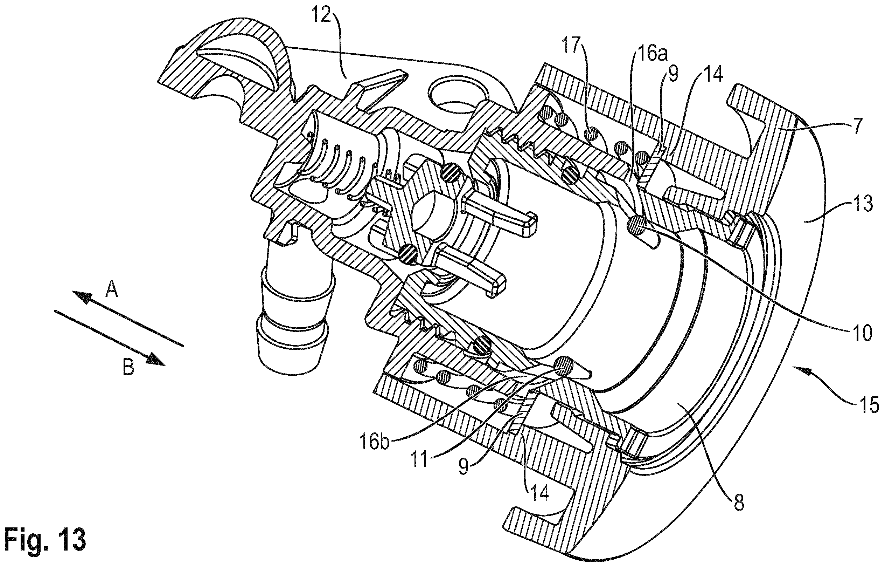

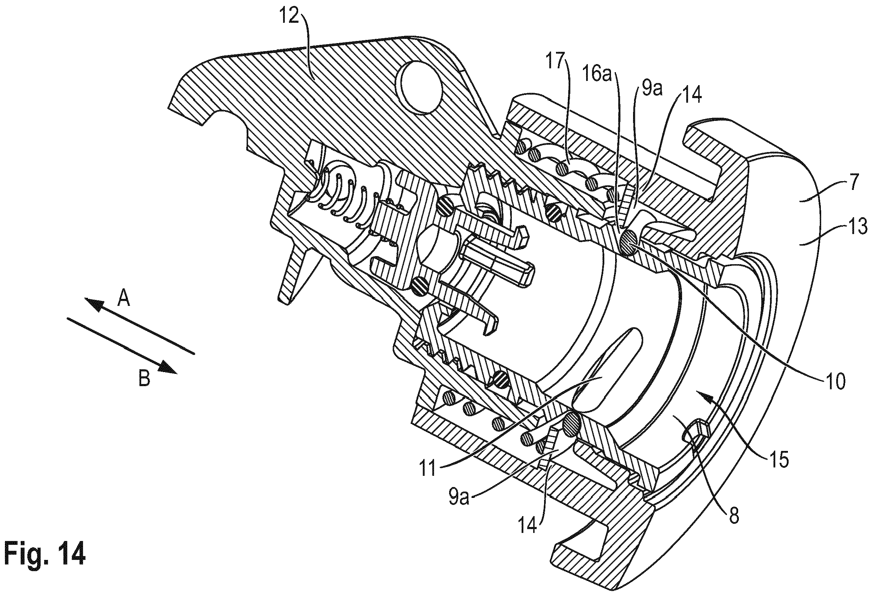

In dem exemplarischen Ausführungsbeispiel, welches in den Figuren 2, 3, 5, 9, 10, 11, 12, 13 und 14 gezeigt ist, ist noch ein Adapter 12 vorgesehen, der nachfolgend im Detail beschrieben wird. Dieser Adapter 12 ist für die Wasseranschlussvorrichtung 4 optional.

Die Auslöseeinrichtung 7 ist in Form einer zylindrischen Hülse ausgestaltet und enthält eine ringförmige Druckfläche 13 und einen innenliegenden Absatz 14. Die als Hülse ausgestaltete Auslöseeinrichtung 7 kann an der Wasseranschlussvorrichtung 4 in eine erste und zweite Position gebracht werden. In Fig. 2 ist die Auslöseeinrichtung 7 in der ersten Position dargestellt. Um die Auslöseeinrichtung 7 in die zweite Position zu bewegen, wird die Auslöseeinrichtung 7 in Richtung A bewegt. Die Auslöseeinrichtung 7 bewegt sich dabei relativ zu der Aufnahmehülse 8 und dem Adapter 12. Um die Auslöseeinrichtung 7 von der ersten Position in die zweite Position zu bewegen, wird ein gewisser Druck auf die Druckfläche 13 in Richtung A ausgeübt. Dieser Druck kann durch den Anwender erzeugt werden. Der Absatz 14 ist als Vorsprung ausgebildet und befindet sich an einer Innenumfangseite der Auslöseeinrichtung 7. Der Absatz bzw. Vorsprung 14 kann auch als Kröpfung bezeichnet werden.

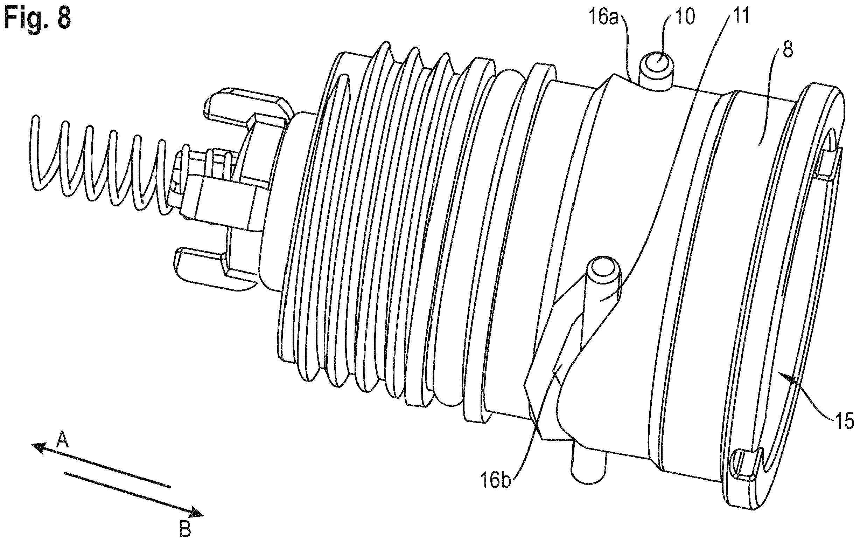

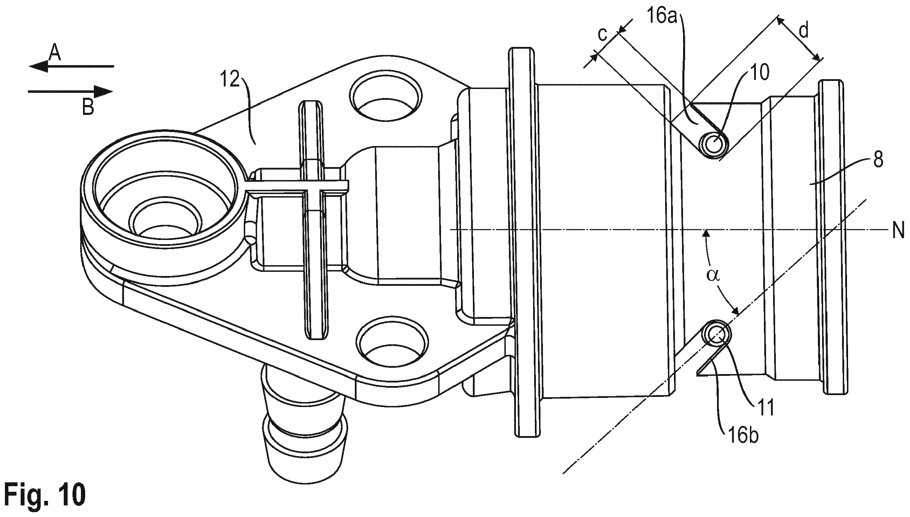

Die Aufnahmehülse 8 enthält einen abgestuften zylindrischen Hohlraum 15, in den der Schlauchverbinder 5 aufgenommen und gehalten werden kann. Die Innenkontur entspricht dabei im Wesentlichen der Außenkontur des Schlauchverbinders 5 (vgl. Fig. 2 und 4). Darüber hinaus enthält die Aufnahmehülse 8 eine erste und eine zweite schlitzförmige Aussparung 16a, 16b. Sowohl die erste als auch die zweite Aussparung 16a, 16b verläuft jeweils in einem spitzen Winkel α zu der Mittelachse N. Die erste und zweite Aussparung 16a, 16b liegen sich dabei an der Aufnahmehülse 8 gegenüber. Die Breite c der jeweils ersten und zweiten Aussparung 16a, 16b ist etwas breiter als der Durchmesser des ersten bzw. zweiten Sperrstiftes 10, 11, sodass der erste Sperrstift 10 in die erste Aussparung 16a und der zweite Sperrstift 11 in die zweite Aussparung 16b aufgenommen werden kann. Die erste und zweite Aussparung 16a, 16b weist eine Tiefe d auf, die ungefähr dem zweifachen Durchmesser des ersten oder zweiten Sperrstifts 10, 11 bzw. der zweifachen Breite c der ersten oder zweiten Aussparung 16a, 16b entspricht (vgl. Fig. 10). Wie in Fig. 8 gezeigt, ist der erste Sperrstift 10 länger als die erste Aussparung 16a und der zweite Sperrstift 11 länger als die zweite Aussparung 16b, sodass ein erstes und ein zweites Ende des ersten Sperrstifts 10 sowie ein erstes und ein zweites Ende des zweiten Sperrstifts 11 aus der jeweiligen Aussparung 16a, 16b herausragt.

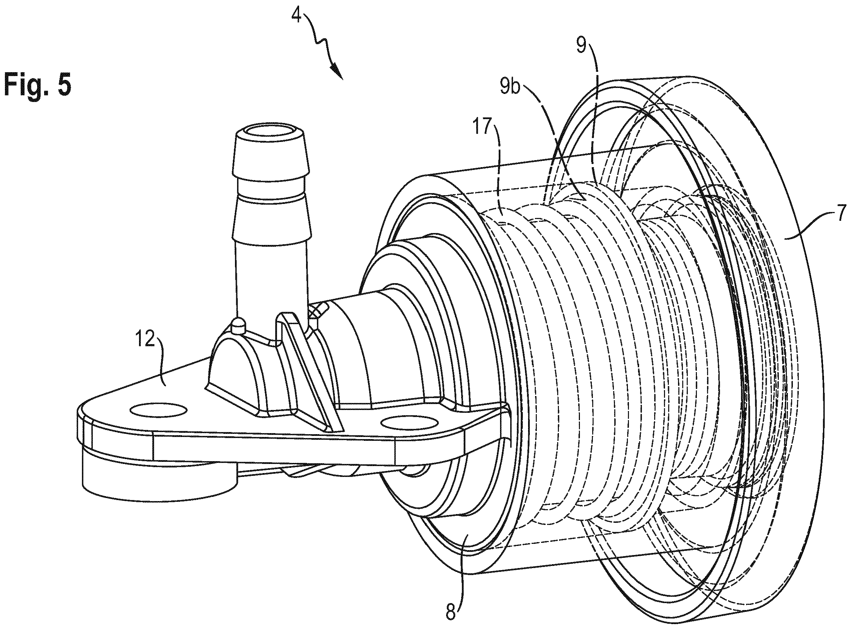

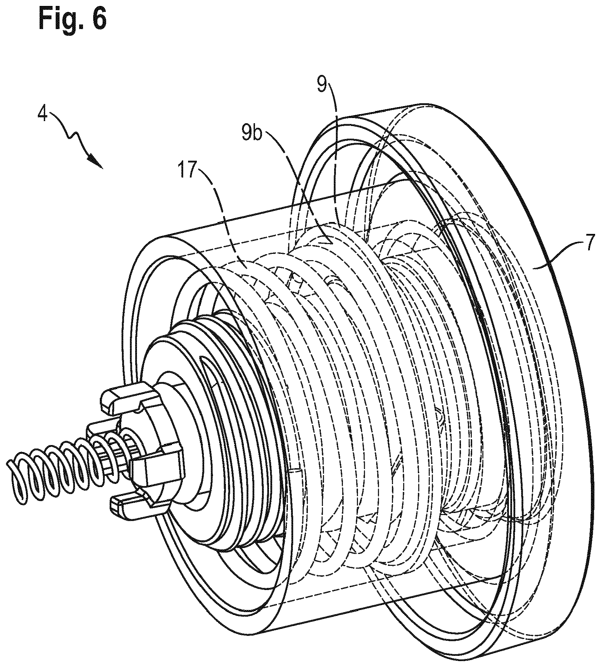

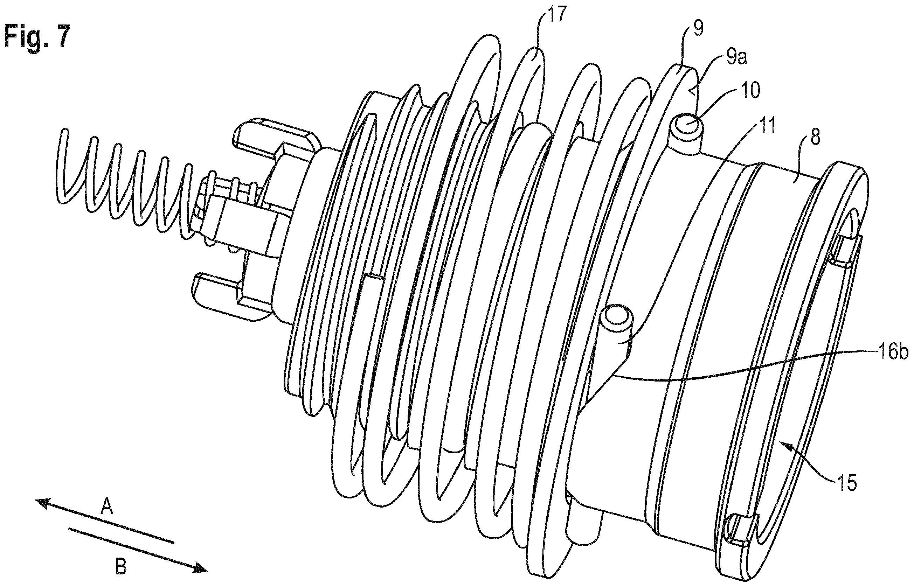

Der Blockierring 9 ist in Form eines scheibenförmigen Rings ausgestaltet und um die Aufnahmehülse 8 herum positioniert. Der Blockierring 9 enthält eine erste und zweite Seitenfläche 9a, 9b. Die Ringbreite e des Blockierrings 9 ist größer als das erste oder zweite Ende des ersten oder zweiten Sperrstifts 10, 11, welches aus der jeweils ersten oder zweiten Aussparung 16a, 16b herausragt (vgl. Fig. 3 und 7).Hierdurch liegen die Ende der Sperrstifte 10, 11 an der ersten Seitenfläche 9a des Blockierrings 9 an. An der zweiten Seitenfläche 9b des Blockierrings 9 liegt eine Feder 17 an, welche um die Aufnahmehülse 8 herum positioniert ist (vgl. Fig. 5, 6, 7, 9 und 11). Die Feder 17 ist in Form einer Spiralfeder ausgestaltet. In einer alternativen Ausgestaltungsform kann die Feder 17 auch in Form einer Blattfeder gestaltet sein.

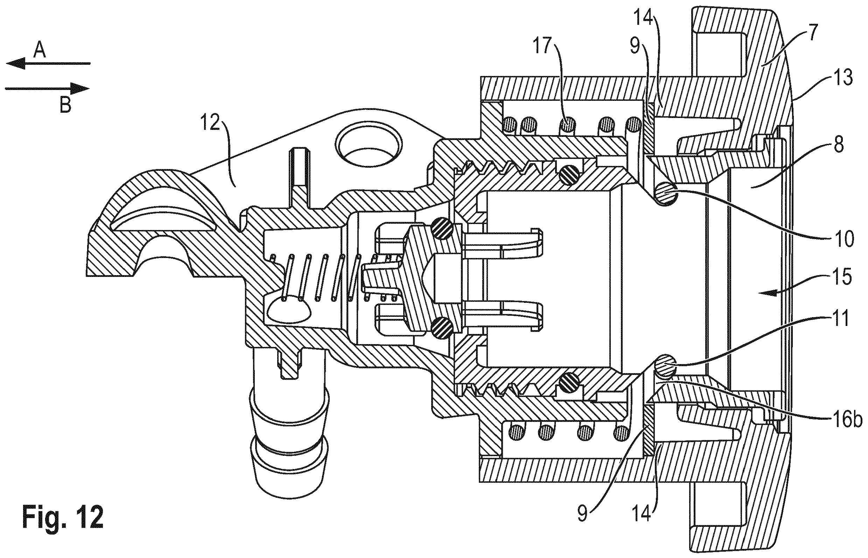

Der erste und zweite Sperrstift 10, 11 ist jeweils in einer ersten und zweiten Position in der ersten bzw. zweiten Aussparung 16a, 16b reversibel positionierbar. Die Sperrstifte 10, 11 bewegen sich dabei relativ zu der Aufnahmehülse 8. Wenn sich der erste bzw. zweite Sperrstift 10, 11 in der ersten Position befindet, ist der Schlauchverbinder 5, welcher in die Aufnahmehülse 8 eingeführt ist, von einer Entnahme aus der Aufnahmehülse 8 blockiert. Wenn sich jedoch der erste bzw. zweite Sperrstift 10, 11 in der ersten Position befindet, kann der Schlauchverbinder 5 wieder aus der Aufnahmehülse 8 entnommen werden. In den Fig. 7 bis 11 befinden sich der erste und zweite Sperrstift 10, 11 jeweils in der ersten Position. Hierbei liegt der erste und zweite Sperrstift 10, 11 an dem jeweiligen geschlossenen Ende der ersten bzw. zweiten schlitzförmigen Aussparung 16a, 16b. Wie in Fig. 12 zu erkennen ist, reduziert sich die Querschnittsfläche der Aufnahmehülse 8, wenn sich der erste und/oder zweite Sperrstift 10, 11 jeweils in der zweiten Position befindet. Die Querschnittsfläche reduziert sich dabei um den Durchmesser bzw. die Querschnittsfläche des ersten und zweiten Sperrstifts 10, 11.

Der Blockierring 9 kann in einer ersten und zweiten Position reversibel positioniert werden. Der Blockierring 9 bewegt sich relativ zu der Aufnahmehülse 8. Wenn sich der Blockierring 9 in der ersten Position befindet, wird der erste und zweite Sperrstift 10, 11 jeweils in die erste Position gedrückt. Die erste Seitenfläche des Blockierrings 9 drückt dabei auf den ersten und zweiten Sperrstift 10, 11. In den Fig. 2, 7, 9 und 11 ist zu erkennen, dass sich der Blockierring 9 in der ersten Position befindet und dabei auf die Sperrstifte 10, 11 wirkt. Die Feder 17, welche sich in Richtung A hinter dem Blockierring 9 befindet, drückt auf die zweite Seitenfläche 9b und drückt mit der Federkraft auf den Blockierring 9. Um den Blockierring 9 von der ersten Position in die zweite Position zu bewegen, wird der Blockierring 9 gegen die Federkraft der Feder 17 in Richtung A bewegt bzw. gedrückt. Wenn sich der Blockierring 9 in der zweiten Position befindet, wird kein Druck mehr von der ersten Seitenfläche 9a des Blockierrings 9 auf die Sperrstifte 10, 11 ausgeübt, sodass die Sperrstifte 10, 11 frei sind von der ersten Position in die zweite Position bewegt zu werden.

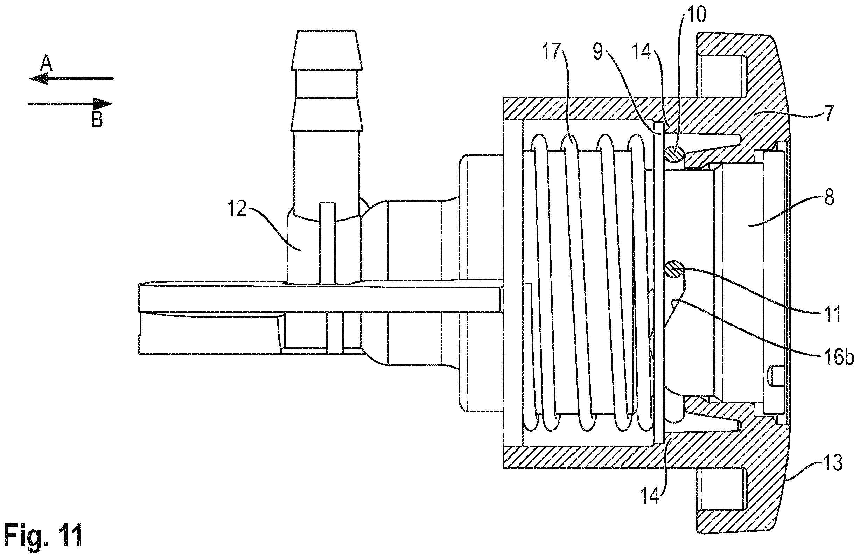

Wie bereits vorstehend beschrieben kann die Auslöseeinrichtung 7 reversibel von einer ersten Position in eine zweite Position bewegt werden. In Fig. 11, 12, 13 und 14 befindet sich die Auslöseeinrichtung 7 in der ersten Position. Wie insbesondere in Fig. 11 zu erkennen ist, liegt eine Fläche des Absatzes 14 der Auslöseeinrichtung 7 an der ersten Seitenfläche 9a des Blockierrings 9 an. Die Ringbreite e des Blockierrings 9 ist dabei so groß, dass sowohl die freien Enden der Sperrstifte 10, 11, welche sich nicht in den schlitzförmigen Aussparungen 16a, 16b befinden, als auch die Fläche des Absatzes 14 der Auslöseeinrichtung 7 an der ersten Seitenfläche 9a des Blockierrings 9 zugleich anliegen können.

Wenn die Auslöseeinrichtung 7 durch einen gewissen Druck in Richtung A auf die Druckfläche 13 von der ersten Position in die zweite Position bewegt wird, drückt die Fläche des Absatzes 14 auf die erste Seitenfläche 9a des Blockierrings 9 und bewegt den Blockierring 9 gegen die Federkraft der Feder 17 von der ersten in die zweite Position. Wie bereits vorstehend beschrieben, wird kein Druck mehr von der ersten Seitenfläche 9a des Blockierrings 9 auf die Sperrstifte 10, 11 ausgeübt, wenn sich der Blockierring 9 von der ersten in die zweite Position bewegt. Die Sperrstifte 10, 11 können nun von der ersten in die zweite Position bewegt werden.

Wenn kein Druck mehr auf die Druckfläche 13 der Auslöseeinrichtung 7 mehr ausgeübt wird, bewirkt die Federkraft der Feder 17, dass der Blockierring 9, die Sperrstifte 10, 11 sowie die Auslöseeinrichtung 7 in Richtung B von der zweiten Position wieder in die erste Position bewegt werden. Hierdurch wird die Querschnittsfläche der Aufnahmehülse 8 erneut um die Querschnittsfläche des ersten und zweiten Sperrstifts 10, 11 reduziert, sodass ein in der Aufnahmehülse 8 befindlicher Schlauchverbinder 5 blockiert wird.

Wenn ein Schlauchverbinder 5 eines Wasserschlauchs 6 zur Versorgung bzw. Befüllung des Wasserspeichers eines Wasseraufbereitungsgeräts 1 mit der Wasseranschlussvorrichtung 4 verbunden werden soll, wird der Schlauchverbinder 5 in die Aufnahmehülse 8 der Wasseranschlussvorrichtung 1 in Richtung A eingeführt. Die Auslöseeinrichtung 7, der Blockierring 9 und auch die beiden Sperrstifte 10, 11 befinden sich jeweils in der ersten Position. Beim Einführen in den Innenraum der Aufnahmehülse 8 drückt der erste Bereich Q des Schlauchverbinders 5 den ersten und zweiten Sperrstift 10, 11 nach außen aus der ersten Position heraus. Die Sperrstifte 10, 11 werden jedoch nicht vollständig in die zweite Position gebracht. Wenn der Schlauchverbinder 5 weiter in Richtung A in die Aufnahmehülse 8 geschoben wird und sich schließlich in der Endposition befindet, liegen die Sperrstifte 10, 11 an den zweiten Bereich R an. Wenn die beiden Sperrstifte 10, 11 an dem zweiten Bereich R anliegen, befinden sich die beiden Sperrstifte 10, 11 wieder in der ersten Position. Dadurch, dass sich die schlitzförmigen Aussparungen 16a, 16b in einem Winkel α in der Aufnahmehülse 8 befinden (vgl. Fig. 10) und der Blockierring 9 mit Hilfe der Feder 17 auf die Sperrstifte 10, 11 drückt, verbleiben die Sperrstifte 10, 11 in der ersten Position und blockieren den Schlauchverbinder 5. Der Schlauchverbinder 5 kann somit nicht aus der Aufnahmehülse 8 entnommen werden, wenn sich die Auslöseeinrichtung 7, der Blockierring 9 und die Sperrstifte 10, 11 jeweils in der ersten Position befinden.

Um den Schlauchverbinder 5 aus der Aufnahmehülse 8 zu entnehmen, wird (wie vorstehend beschrieben) die Auslöseeinrichtung 7 von der ersten in die zweite Position bewegt. Der Absatz 14 der Auslöseeinrichtung 7 drückt gegen die erste Seitenfläche 9a des Blockierrings 9 und bewegt somit den Blockierring 9 von der ersten Position in die zweite Position. Wenn sich der Blockierring 9 in der zweiten Position befindet, können die Sperrstifte 10, 11 von der ersten Position in die zweite Position frei bewegt werden. Wenn der Schlauchverbinder 5 in Richtung B aus der Aufnahmehülse 8 gezogen wird, drückt der erste Bereich Q des Schlauchverbinders 5 gegen die frei beweglichen Sperrstifte 10, 11. Die Blockade durch die Sperrstifte 10, 11 ist nunmehr aufgehoben, sodass der Schlauchverbinder 5 aus der Aufnahmehülse 8 entnommen werden kann.

Dadurch, dass die Auslöseeinrichtung 7 mit nur einem Finger des Anwenders des Wasseraufbereitungsgeräts 1 von der ersten in die zweite Position gebracht werden kann, um schließlich die Sperrstifte 10, 11 frei bewegbar zu machen, wird eine Wasseranschlussvorrichtung 4 bereitgestellt, mit der auf einfache Art und Weise sowohl das Verbinden des Wasserschlauchs 6 mit dem Wasseraufbereitungsgerät 1 als auch das erneute Lösen des Wasserschlauchs 6 von dem Wasseraufbereitungsgerät 1 gewährleistet ist.

## Patentansprüche

1. Wasseranschlussvorrichtung (4), insbesondere für ein Wasseraufbereitungsgerät (1), zur wiederlösbaren Verbindung mit einem Schlauchverbinder (5),
**gekennzeichnet durch**
- eine Auslöseeinrichtung (7) in Form einer Hülse mit einer Druckfläche (13) und einem Absatz (14);
- wenigstens einen Sperrstift (10, 11) zum Halten des Schlauchverbinders (5) in der Wasseranschlussvorrichtung (4);
- eine Aufnahmehülse (8) zur Aufnahme des Schlauchverbinders (5) und mit wenigstens einer Aussparung (16a, 16b) zur Aufnahme des wenigstens einen Sperrstiftes (10, 11);
und
- einen Blockierring (9) mit einer ersten und zweiten Seitenfläche (9a, 9b);
wobei der wenigstens eine Sperrstift (10, 11) in einer ersten und zweiten Position in der Aussparung (16a, 16b) reversibel positionierbar ist, sodass in der ersten Position ein in der Aufnahmehülse (8) befindlicher Schlauchverbinder (5) blockiert ist und in der zweiten Position der in der Aufnahmehülse (8) befindliche Schlauchverbinder (5) zur Entnahme aus der Aufnahmehülse (8) freigegeben ist, und
wobei der Blockierring (9) in einer ersten und zweiten Position reversibel positionierbar ist, sodass in der ersten Position die erste Seitenfläche des Blockierrings (9a) den wenigstens einen Sperrstift (10, 11) in der ersten Position hält und in der zweiten Position der Sperrstift (10, 11) in die zweite Position bewegbar ist, und
wobei die Auslöseeinrichtung (7) **durch** Druck auf die Druckfläche (13) von einer ersten Position in eine zweite Position reversibel bewegbar ist, sodass in der zweiten Position der Absatz der Auslöseeinrichtung (7) gegen die erste Seitenfläche (9a) des Blockierrings (9) drückt, um den Blockierring (9) in die zweite Position zu bewegen und damit den wenigstens einen Sperrstift (10, 11) von der ersten Position in die zweite Position bewegbar macht.

2. Wasseranschlussvorrichtung (4) nach Anspruch 1,
**dadurch gekennzeichnet, dass** der Blockierring (9) eine Feder (17) enthält, um den Blockierring (9) federbeaufschlagt in der ersten Position zu halten.

3. Wasseranschlussvorrichtung (4) nach Anspruch 1 oder 2,
**dadurch gekennzeichnet, dass** wenigstens ein zweiter Sperrstift (10, 11) enthalten ist.
